(19) Europäisches Patentamt
European Patent Office
Office européen des brevets

(11) **EP 1 798 665 A2**

(12) **EUROPEAN PATENT APPLICATION**

(43) Date of publication:
**20.06.2007 Bulletin 2007/25**

(51) Int Cl.:
***G06K 9/00*** *(2006.01)*  ***B41F 33/00*** *(2006.01)*

(21) Application number: **06126374.5**

(22) Date of filing: **18.12.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **19.12.2005 JP 2005364642**
              **19.12.2005 JP 2005364673**
              **19.12.2005 JP 2005364704**
              **19.12.2005 JP 2005364739**

(71) Applicant: **Glory Ltd.**
**Himeji-shi,**
**Hyogo 671-8567 (JP)**

(72) Inventors:
• **Shimamura, Shoichi**
**Tokyo 135-0062 (JP)**
• **Kano, Keisaku**
**Gunma 370-3103 (JP)**

• **Takemura, Junichi**
**Tokyo 202-0023 (JP)**
• **Matsueda, Kei**
**Chiba 271-0093 (JP)**
• **Kubota, Mineo**
**Yamanashi 400-0041 (JP)**
• **Kitta, Toru**
**Yamanashi 406-0831 (JP)**
• **Ogino, Kouji**
**Yamanashi 400-0306 (JP)**
• **Shimizu, Makoto**
**Yamanashi 400-0118 (JP)**
• **Kobayashi, Hitoshi**
**Yamanashi 407-0104 (JP)**
• **Ueda, Mitsugi**
**Yamanashi 400-0416 (JP)**

(74) Representative: **Viering, Jentschura & Partner**
**Postfach 22 14 43**
**80504 München (DE)**

(54) **Print inspecting apparatus**

(57)     A print inspecting apparatus which can perform print inspection flexibly at high precision while excluding influence due to individual differences among printers is provided. A print inspecting apparatus 1 prepares a dictionary defining correspondence relationship between character information of all characters which is preliminarily inputted from a print server 60 and can be printed on a continuous business form by a printer 70 and feature amounts of all characters which are printed on a continuous business form sheet by the printer 70 and are read by a main unit 10 and computed in a processing unit 30 and determines whether or not a feature amount of a character to be inspected which is read from the continuous business form and computed in the processing unit 30 is equal to or more than a determination reference value preliminarily set to the feature amount of the character whose correspondence relationship has been defined in the dictionary utilizing correct solution information regarding a character string preliminarily inputted from the print server 60 and printed on the continuous business form by the printer as index.

Fig. 10

Description

**FIELD OF THE INVENTION**

The present invention relates to a print inspecting apparatus, and in particular to a print inspecting apparatus which inspects a character printed on a form or sheet printed by a printer.

**DESCRIPTION OF THE RELATED ART**

For example, account sheets or debit notes monthly issued by a banking facility or the like are sent or mailed to respective customers after characters, numerals, and/or symbols (hereinafter, simply called "characters") are printed on predetermined forms such as a fan-folded paper by a printing apparatus or a printer, respective forms are cut to individual forms by a post-processing apparatus, individual forms are folded as necessary, and they are automatically enclosed in envelopes by an inserting apparatus. Among them, when there are many account sheets to be issued or the like, a system printer which allows fast printing at high precision is used.

However, even if a high precision printer such as system printer is used, print defect due to printer failure, paper quality, print environment or the like, such as irregularities of characters, density differences (character thinning, blur, character thickening, or character collapse), character omission, or character skew occurs.

Therefore, technologies such as an inspecting apparatus for inspecting whether or not a dot in a print pattern printed by a printer meets a predetermined reference (for example, see JP-B-07-82542), a printer apparatus which performs template-matching or a bitmap matching between input image data and image data on a printed matter (for example, see Japanese Patent No. 2994257 or JP-A-2001-96872), a printer apparatus which performs comparison between a bitmap font generated from a character code in a character generator and a bitmap on a printed matter for determination (for example, see JP-A-2003-305927), and a print inspecting apparatus which divides a reference image of a whole printed matter inputted and an image of the whole printed matter read into pieces of the former image and pieces of the latter image and performs comparison between the former and the latter (for example, see JP-A-2000-172844) have been disclosed. As a technique for recognizing a hand-written character, a pattern recognizing apparatus which prepares a recognition dictionary utilizing a secondary identification function introduced from the Bays decision rule considering a rival category has been also disclosed (for example, see JP-A-2002-150221).

These conventional techniques can be roughly classified to two kinds of techniques of an image collating technique which collates image data used for printing and image data read from a printed matter with each other and a recognition collating technique which reads a printed matter to perform OCR processing thereon and collates a result obtained by converting recognized character to character data based upon character recognition.

On the other hand, a mark serving as a reference of each page of a form in order to read the form for each page to perform print inspection. Therefore, an addition mark such as a toner mark or a cross-shaped register mark is printed on a form by a printer. When the toner mark is printed, the toner mark is printed on each page, so that a technique for providing a sensor detecting a toner mark separately or a technique for buffering an image for detecting a toner mark is used.

Since a collation (inspection) processing is heavy in load, for example, images are clipped from a form for each page and clipped images on each page are applied with a distribution processing using a plurality of computers. As an ordinary technique for performing such a distribution processing, a technique for connecting a plurality of computers in a daisy-chain manner has been known (for example, see JP-A-2003-196230 and JP-A-2004-289754). When collation processing is performed utilizing a daisy-chain configuration, a processing time in each stage is determined based upon a processing time of a computer applied with the heaviest load.

In the conventional art, however, precision when image collation or recognition collation is performed lowers due to fine differences in shape of the same font among the printers. When there are a plurality of character code systems used in a print application software, it is necessary to examine logic at a character collation time for each code system, each font, and each font size. Even if a dictionary is prepared by reading characters printed on a form by a printer in a print inspection apparatus, such a problem arises that collation is rejected due to a problem of aging degradation of the printer.

Since a form is read for each page, the technique for providing a sensor for detecting a toner mark separately is inferior to a case that a page is recognized from images on the form in position detection precision, so that an image may have absence when an image on each page is clipped. In this connection, the technique for buffering an image can solve the problem by a large scale memory, but increase in cost is caused. On the contrary, when the addition mark is used, these problems are solved, but it is difficult to determine start and end of each page of the form by only monitoring one mark. Since print processing information (information for specifying jot to a form performed by a printer and each page) which allows reference to correct solution when print inspection is performed is not printed conventionally, it is necessary for an operator to manage correspondence between a printed form and correct solution information which is electronic data, so that when print inspection job is rangy, complicated work is required. When the print processing information is printed on the form using barcode, the barcode may interfere with a mark serving as a reference of each page to misidentify start/end of each page.

When collation processing is performed in the daisy-chain configuration, since processing load is different among respective computers due to difference in number of characters among respective pages of the form, when setting is performed to satisfy the highest load, a capacity operating rate lowers so that it is impossible to bring out the capacities of the respective computers sufficiently (the capacity operating rate can not be raised). As a result, it is difficult to reduce a collation time. In order to solve the problem, such a configuration that images read from the form are sequentially inputted to computers which have completed their jobs (collation processings) is proposed. However, for example, when absence occurs in a page, correspondence between a page of image data delivered to a computer and a page of an actual page can not be obtained. Therefore, it is difficult to adopt such a configuration in order to elevate collation precision.

## SUMMARY OF THE INVENTION

In view of these circumstances, a first object of the present invention is to provide a print inspecting apparatus which can perform print inspection flexibly with high precision by excluding influence due to individual differences among computers. A second object of the present invention is to provide a print inspecting apparatus which has a learning function. A third object of the present invention is to provide a print inspecting apparatus which facilitates correspondence management between a form printed by a printer and correct solution information. A fourth object of the present invention is to provide a print inspecting apparatus which can improve a capacity operating rate of computers when collation processing is performed utilizing a daisy-chain configuration.

In order to achieve the first object, according to a fist aspect of the present invention, there is provided a print inspecting apparatus which inspects a character printed on a form by a printer, comprising: a conveying unit which conveys the form in one direction; an image reading unit which reads an image on the form conveyed by the conveying unit; a feature amount computing unit which clips an image of a character printed on the form from an image read by the image reading unit; a dictionary preparing unit which defines a correspondence relationship between preliminarily inputted character information including codes, fonts and font sizes of all characters which can be printed on the form by the printer and feature amounts of the all characters which are printed on the form in a predetermined format so as to correspond to the character information by the printer, is read by the image reading unit, and is computed in the feature amount computing unit; and a print determining unit which utilizes preliminarily inputted correct solution information regarding a character string printed on the form by the printer as index to make determination about whether or not the feature amount of the character to be inspected which has been read from the form in the image reading unit and been computed in the feature amount computing unit is equal to or more than a determination reference value preliminarily set to the feature amount of the character whose correspondence relationship has been defined in the dictionary preparing unit to determine that the character to be inspected has been printed on the form correctly by the printer when the feature amount of the character to be inspected is equal to or more than the determination reference value.

In the first aspect, all characters constituting the character information are printed on a form in a predetermined format so as to correspond to the character information including codes, fonts and font sizes of all characters which can be printed on the form by the printer. The form on which all characters have been printed is conveyed in the one direction by the conveying unit, images of characters on the form conveyed by the conveying unit are read by the image reading unit, and an image of a character printed on the form is clipped from the image read in the image reading unit by the feature amount computing unit, so that a feature amount of the clipped character is computed. The above-described character information is preliminarily inputted into the dictionary preparing unit, and a dictionary defining a correspondence relationship between feature amounts of all characters computed in the feature amount computing unit and the character information is prepared in the dictionary preparing unit. A form used for dictionary preparation may be an approximately plain form. Next, a character string to be inspected is printed on the form by the printer. Correct solution information regarding the character string which has been printed on the form by the printer is preliminarily inputted into the print determining unit. Character information of respective characters constituting the character string which has been printed on the form is included in the correct solution information. Inputting of the above-described character information and correct solution information may be performed via a recording medium which the dictionary preparing unit or the print determining unit can read, or it may be performed on line from the printer or a computer controlling the printer. The form on which the character string has been printed is conveyed in the one direction by the conveying unit, the image on the form conveyed by the conveying unit is read by the image reading unit, and an image of a character printed on the form is clipped from the image read in the image reading unit by the feature amount computing unit, so that the feature amount of the clipped character is computed. In the print determining unit, determination about whether or not the feature amount of the character to be inspected computed in the feature amount computing unit is equal to or more than the determination reference value preliminarily set to the feature amount of the character whose correspondence relationship has been defined in the dictionary preparing unit (the character whose correspondence relationship with the feature amount has been defined according to the dictionary prepared by the dictionary preparing unit) is made in the print determining unit utilizing preliminarily inputted correct solution information as index, and when determination that the feature amount of the character to be inspected is equal to or more than the determination reference value is made, determination that the character to be inspected has been printed on the form by the printer correctly is made.

According to the first aspect, since the dictionary defining the correspondence relationship between the feature amounts of the all characters printed on the form actually printed by the printer and the character information is prepared by the dictionary preparing unit, and determination is made by the print determining unit about whether or not the feature amount of the character which has been actually printed on the form by the printer and has computed in the feature amount computing unit is equal to or more than the determination reference value preliminarily set to the feature amount of the character whose correspondence relationship with feature amount has been defined in the dictionary preparing unit, the print determining unit collates feature amounts of characters printed by the same printer so that influence due to individual differences among printers can be excluded. Since the feature amounts are collated with each other, it is unnecessary to examine logic at collation time for each character information. Since the print determining unit makes determination utilizing the determination reference value as threshold, determination can be made flexibly by setting the threshold properly about whether or not a character has been printed correctly.

In order to achieve the first and second objects, the print inspecting apparatus according to the first aspect further comprises a display unit which, when determination that the feature amount of the character computed by the feature amount computing unit is less than the determination reference value of the feature amount of the character whose correspondence has been defined by the dictionary preparing unit has been made by the print determining unit, displays an image of a character to be inspected which has been clipped by the feature amount computing unit, an input unit for causing an operator to input a determination result of the operator about whether or not the character to be inspected which has been displayed on the display unit has been printed on the form correctly by the printer, and a registration unit which, when information indicating that a character to be inspected has been printed correctly has been inputted from the input unit, registers a feature amount computed by the feature amount computing unit to the feature amounts in the dictionary prepared in the dictionary preparing unit as an additional feature amount utilizing the feature amount of the character to be inspected as index, wherein the dictionary preparing unit prepares a dictionary defining a correspondence relationship among preliminarily inputted character information including codes, fonts and font sizes of all characters which can be printed on the form by the printer, feature amounts of the all characters which are printed on the form in a predetermined format so as to correspond to the character information by the printer, is read by the image reading unit, and is computed in the feature amount computing unit, and the image of the character which has been clipped in the feature amount computing unit.

In this aspect, when determination that the feature amount of the character computed by the feature amount computing unit is less than the determination reference value of the feature amount of the character whose correspondence has been defined by the dictionary preparing unit has been made by the print determining unit, the image of the character to be inspected which has been clipped by the feature amount computing unit is displayed on the display unit, a determination result of an operator about whether or not the character to be inspected which has been displayed on the display unit has been printed correctly on the form by the printer is inputted from the input unit, and when information indicating that the character to be inspected has been printed correctly is inputted from the input unit, the feature amount computed in the feature amount computing unit is registered in the feature amounts in the dictionary prepared by the dictionary preparing unit by the registration unit as an additional feature amount utilizing the character information of the character to be inspected as index.

According to this aspect, since the dictionary defining the correspondence relationship between the feature amounts of the all characters printed on the form actually printed by the printer and the character information is prepared by the dictionary preparing unit, and determination is made by the print determining unit about whether or not the feature amount of the character which has been actually printed on the form by the printer and has computed in the feature amount computing unit is equal to or more than the determination reference value preliminarily set to the feature amount of the character whose correspondence relationship with feature amount has been defined in the dictionary preparing unit, the print determining unit collates feature amounts of characters printed by the same printer so that influence due to individual differences among printers can be excluded. Since the print determining unit makes determination utilizing the determination reference value as threshold, determination can be made flexibly by setting the threshold properly about whether or not a character has been printed correctly. Since, even if determination that the feature amount of the character to be inspected is less than the determination reference value is once made by the print determining unit, the determination result of an operator can be inputted via the display unit and the input unit, a problem of aging degradation of a printer can be solved. Since the feature amount of the character which has been determined as being less than the determination reference amount in the print determining unit is registered in the dictionary as an additional feature amount, a learning function can be given to the dictionary.

In order to achieve the first and third objects, the print inspecting apparatus according to the first aspect is a print inspecting apparatus where the print determining unit utilizes preliminarily inputted correct solution information including print processing information for specifying jog to the form performed by the printer and specifying each page regarding a character string printed on the form by the printer as index to make determination about whether or not the feature amount of the character to be inspected which has been read from the form in the image reading unit and been computed in the feature amount computing unit is equal to or more than a determination reference value preliminarily set to the feature amount of the character whose correspondence relationship has been defined in the dictionary preparing unit to determine that the character to be inspected has been printed on the form correctly by the printer when the feature amount of the character to be inspected is equal to or more than the determination reference value, the image reading unit reads a plurality of marks printed at predetermined positions of respective pages to clip images on the form for each page and reads and decodes barcodes obtained by coding the print processing information printed on the respective pages of the form by the printer to notify the decoded print processing information to the print determining unit, and the print determining unit refers to the print processing information notified from the image reading unit to specify correct solution information from the correct solution information preliminarily inputted.

In this aspect, a character string of characters to be inspected is printed on the form, and barcodes obtained by coding the print processing information for specifying job to the form performed by the printer are printed at predetermined positions on the respective page of the form and respective pages and a plurality of marks are selectively printed at predetermined positions on the respective page of the form. That is, when the plurality of marks are directly printed at predetermined positions on the respective pages of the form, the plurality of marks are not required by the printer, but the plurality of marks are printed on a form which has not printed with the marks. The correct solution information including the print processing information regarding a character string printed on the form by the printer is preliminarily inputted into the print determining unit. The form printed with the character string, the barcode, and the plurality of marks is conveyed in the one direction by the conveying unit, the plurality of marks printed on at the predetermined positions on the respective pages of the form conveyed by the conveying unit are read by the image reading unit so that images on the form are clipped for each pages, the barcodes printed on the respective pages of the form are read so that the print processing information is decoded, and the decoded print processing information is notified to the print determining unit. The image of the character printed on the form is clipped from the image clipped for each page by the image reading unit and the feature amount of the clipped character is computed. In the print determining unit, the correct solution information regarding the character string to be inspected is specified from the preliminarily inputted correct solution information by referring to the print processing information notified from the image reading unit, determination about whether or not the feature amount of the character to be inspected computed in the feature amount computing unit is equal to or more than the determination reference value preliminarily set to the feature amount of the character whose correspondence relationship has been defined in the dictionary preparing unit (the character whose correspondence relationship with the feature amount has been defined according to the dictionary prepared by the dictionary preparing unit) is made in the print determining unit utilizing the specified correct solution information as index, and when determination that the feature amount of the character to be inspected is equal to or more than the determination reference value is made, determination that the character to be inspected has been printed on the form by the printer correctly is made.

According to the aspect, since the dictionary defining the correspondence relationship between the feature amounts of the all characters printed on the form actually printed by the printer and the character information is prepared by the dictionary preparing unit, and determination is made by the print determining unit about whether or not the feature amount of the character which has been actually printed on the form by the printer and has computed in the feature amount computing unit is equal to or more than the determination reference value preliminarily set to the feature amount of the character whose correspondence relationship with feature amount has been defined in the dictionary preparing unit, the print determining unit collates feature amounts of characters printed by the same printer so that influence due to individual differences among printers can be excluded. Since the print determining unit makes determination utilizing the determination reference value as threshold, determination can be made flexibly by setting the threshold properly about whether or not a character has been printed correctly. Since the image reading unit reads the plurality of marks printed on the form to recognize respective pages of the form, images on the respective pages can be clipped accurately. Since the image reading unit reads and decodes the barcodes printed on the form to notify the print processing information to the print determining unit, even if the print inspection job is rangy, the print determining unit can specify the correct solution information regarding the character string to be expected from the preliminarily inputted correct solution information by referring to the print processing information so that correspondence management between the form printed by the printer and the correct solution information can be performed easily.

In order to achieve the fourth object, according to a second aspect of the present invention, there is provided a print inspecting apparatus which inspects a character printed on a form by a printer, comprising: a conveying unit which conveys the form in one direction; a storage unit which stores preliminarily inputted correct solution information regarding a character string printed on the form by the printer; an image reading unit which clips images on the form conveyed by the conveying unit, and reads and decodes a barcode which is printed on each page of the form by the printer and is obtained by coding print processing information for specifying job to the form performed by the printer and each page; and a print inspecting unit having a plurality of computers, which receives image data corresponding to the clipped one page from the image reading unit and the print processing information corresponding to the image data, and performs a collation inspection between information obtained from the character image of the image data and correct solution information of a page corresponding to the image data extracted from the correct solution information stored in the storage unit based upon the print processing information, wherein the plurality of computers are connected in a daisy-chain configuration where the image reading unit is positioned at the most upstream side through a communication line, and each computer of the computers has a data acquiring unit which acquires the image data and print processing unit transmitted from the image reading unit, a data transferring unit which transfers the image data and print processing unit transmitted from the image reading unit to a downstream side computer, and a status information transferring unit which transfers status information indicating an operation state of a computer transmitted from a downstream side computer to an upstream side computer or the image reading unit, and the image reading unit refers to status information of the each computer to specify a computer put in an awaiting state and transmits the image data and print processing information to the specified computer via the communication line.

In the second aspect, a desired character (character string) and a barcode obtained by coding print processing information for specifying job to the form performed by the printer and each page are printed on each page of the form. Correct solution information regarding a character string printed on the form by the printer is preliminarily inputted and stored in the storage unit. Inputting of the correct solution into the storage unit may be performed via a recording medium or it may be performed on line from the printer or a computer controlling the printer. The form on which the character and the print processing information have been printed by the printer is conveyed in the one direction by the conveying unit, images on the form conveyed by the conveying unit are read and clipped for each page, and the barcode printed on each page of the form is decoded so that the print processing information is acquired. The print inspecting unit is composed of a plurality of computers, and the plurality of computers are connected in a daisy-chain configuration where the image reading unit is positioned at the most upstream side through a communication line. Each computer has the status information transferring unit which transfers status information indicating an operation status of a computer transmitted from a downstream side computer to an upstream side computer or the image reading unit, and the image reading unit refers to status information of each computer to specify a computer put in an awaiting state and transmits the image data corresponding to one page and print processing information corresponding to image data to the specified computer via the communication line. Each computer has the data acquiring unit which acquires the image data and the print processing information transmitted from the image reading unit and the data transferring unit which transfers the image data and the print processing information transmitted from the image reading unit to the downstream side computer. The computer which has been specified by the image reading unit acquires the image data and the print processing information at the data acquiring unit, and a computer which has not been specified by the image reading unit transfers the image data and the print processing information to the downstream side computer at the data transferring unit. A computer which has received image data corresponding to one page and print processing information corresponding to the image data performs collation processing between information obtained from the character information of the image data and correct solution information of a page corresponding to the image data extracted from the correct solution information stored in the storage unit based upon the print processing information.

According to the second aspect, since the image reading unit refers to the status information of each computer transferred by the status information transferring unit in each computer to specify a computer put in an awaiting state and transmit image data to the specified computer. Each computer acquires the image data at the data acquiring unit when it is specified, and the each computer transfers the image data to a downstream side computer at its data transferring unit when it is not specified. Therefore, when collation inspection (collation processing) is performed with the daisy-chain configuration, image data and print processing information can be sequentially transmitted to computers put in an awaiting state, so that a capacity operating rate of the computers constituting the print inspection unit can be raised. Since the image reading unit transmits image data corresponding to one mage and print processing information corresponding to the image data to each computer, each computer can refer to correct solution information to perform collation processing reliably.

The present invention can adopt various aspects other than the above aspects and it can achieve various effects corresponding to the aspects. These aspects and effects will be explained below in detail with reference to embodiments.

**BRIEF DESCRIPTION OF THE DRAWINGS**

Fig. 1 is an appearance perspective view of a print inspecting apparatus of an embodiment to which the present invention can be applied;

Fig. 2 is a schematic sectional view of a main unit of the print inspecting apparatus;

Fig. 3 is a block diagram illustratively showing functions of processing units in the print inspecting apparatus;

Fig. 4 is a block diagram showing a daisy-chain structure between the main unit and the processing unit;

Fig. 5 is an explanatory diagram showing a print example printed on a continuous business form by a system printer;

Fig. 6 is an explanatory diagram showing a data structure of inspection job data;

Fig. 7 is a flowchart of a processing routine which a microcomputer in the main unit executes in a print inspecting processing;

Fig. 8 is a flowchart of a processing routine which a CPU in an image processing unit executes in a print inspecting processing;

Fig. 9 is a flowchart of a processing routine which an inspecting terminal executes in a print inspecting processing; and

Fig. 10 is a flowchart of a processing routine which an inspecting server executes in a print inspecting processing.

## DETAILED DESCRIPTION OF THE PREFERRED EMBODIMENTS

An embodiment of a print inspecting apparatus according to the present invention will be explained below with reference to the drawings. Incidentally, in the embodiment, an example where a continuous business form printed by a printer is inspected offline (non-linkage with printing performed by a printer) will be explained.

(Constitution)

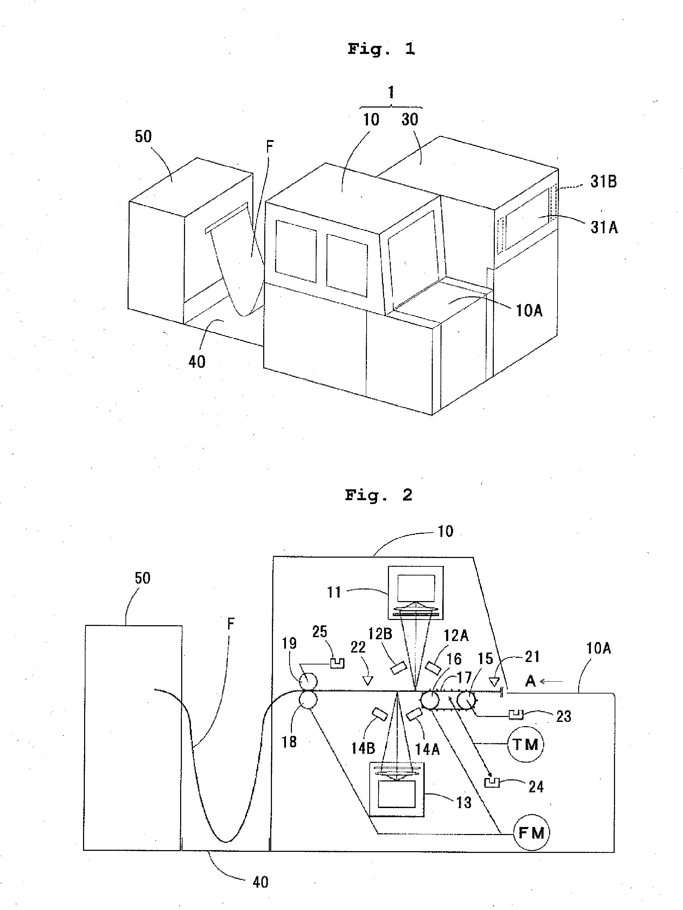

As shown in Fig. 1, a print inspecting apparatus 1 of the embodiment is provided with a main unit (reading unit) 10 which reads images printed on a continuous business form F such as a fan-folded paper (folded print papers with feeding holes) by a printer, and a processing unit 30 which makes determination about whether or not characters, numerals, and symbols (hereinafter, called "character") have been correctly printed on the continuous business form F by the printer.

As shown in Fig. 2, the main unit 10 has two tractor belts 17 which are formed with a plurality of projections engaged with feeding holes formed on both sides of the continuous business form F to convey the continuous business form F in one direction (in a direction of arrow A in Fig. 2) inside a casing having an approximately horizontal conveying face 10A. The tractor belts 17 are spanned between tractor rollers 15 and 16. Incidentally, the main unit 10 has a tractor width adjusting motor TM for adjusting a tractor width between the two tractor belts 17 in order to match with a width size of the continuous business form F.

On the other hand, conveying and discharging rollers 18 and 19 which covey the continuous business form F in the one direction (in the direction of arrow A in Fig. 2) in cooperation with the tractor belts 17 and discharge the continuous business form F outside the main unit 10 are disposed in the vicinity of a discharge port (not shown) of the casing. The tractor roller 16 and the conveying and discharging roller 18 are drive rollers, and are transmitted with rotational driving forces from a conveying motor FM (a portion of the conveying unit) composed of a stepping motor via a driving force transmission mechanism (not shown) composed of a plurality of gears. Incidentally, such a structure that the conveying and discharging roller 19 can be moved between two positions where it separates from the conveying and discharging roller 18 and contacts with the roller 18 is adopted for the conveying and discharging rollers 18 and 19 in order to allow setting of the continuous business form F in between the conveying and discharging rollers 18 and 19.

An upper face of the tractor belt 17 spanned between the tractor rollers 15 and 16 and a contacting point between the conveying and discharging rollers 18 and 19 are set to be approximately flush with each other. Therefore, the continuous business form F is guided into the casing of the main unit 10 approximately horizontally in a state that a back face thereof sliding-contacts with the conveying face 10A and the form F is pulled between the conveying and discharging rollers 18 and 19 and the tractor belt 17 with a constant force so that it is conveyed in its approximately horizontal state to be discharged outside the casing by the conveying and discharging rollers 18 and 19. Incidentally, in the embodiment, the maximum conveying speed of the continuous business form F is set to 1.5m/s or so.

A surface line scan camera 11 serving as the image reading unit for reading an image printed on a surface of the continuous business form F is disposed above the tractor belt 17 on a downstream side thereof and a back face line scan camera 13 for reading an image printed on a back face of the continuous business form F is disposed below the tractor belt 17 on a slightly downstream side of the surface line scan camera 11. The line scan cameras 11 and 13 are each composed of a dichroic filter, a lens, and a CCD line sensor in the casing.

White light LED arrays 12A, 12B, and 14A, 14B for illuminating reading positions of the line scan cameras 11 and 13 are disposed on both sides of the reading positions. Incidentally, rod lenses (not shown) for condensing white lights in a line shape to the reading positions are respectively disposed in the vicinity of the LED arrays 12A, 12B, and 14A, 14B.

An original set detecting sensor 21 for detecting whether or not a continuous business form F has been set in the main unit 10 which is disposed above the tractor belt 17 on an upstream side thereof, a remaining paper detecting sensor 22 for detecting whether or not the continuous business form F remains which is disposed between the tractor belt 17 and the conveying and discharging rollers 18 and 19, a rotary encoder 23 which is attached to a rotational shaft of the tractor roller 15 for detecting a conveyance amount of the tractor belt 17 to the continuous business form F, a tractor width home position detecting sensor 24 which is attached in the vicinity of a gear (not shown) for adjusting a tractor width between two tractor belts 17 for detecting a home position of the tractor width, and a jamming detecting sensor 25 which is attached to the rotational shaft of the conveying and discharging roller 19 for detecting jamming of the continuous business form F are disposed in the main unit 10, respectively.

The main unit 10 has a power source unit (not shown) which converts a commercial alternating current power source to a direct current power source which can drive/activate a drive unit or the like and a microcomputer (not shown) which performs operation control on the whole main unit 10. The microcomputer is connected with a sensor control unit for controlling the above-described sensors, an actuator control unit for controlling the motor drives, an image processing unit which has a CPU, for clipping an image corresponding to one page read by the line scan camera to conduct skew correction and for reading a barcode described later, and an interface for performing communication with the processing unit 30 via an external bus.

A plurality of opening doors for setting a continuous business form F and for maintenance and repair are provided in the casing of the main unit 10. A folding apparatus 50 for folding a continuous business form F and a loop stand 40 serving as a buffer for adjusting a folding rate of the folding apparatus 50 and a conveying speed of the continuous business form F of the main unit 10 are disposed on a downstream side of the main unit 10 in the order of the loop stand 40 and the folding apparatus 50.

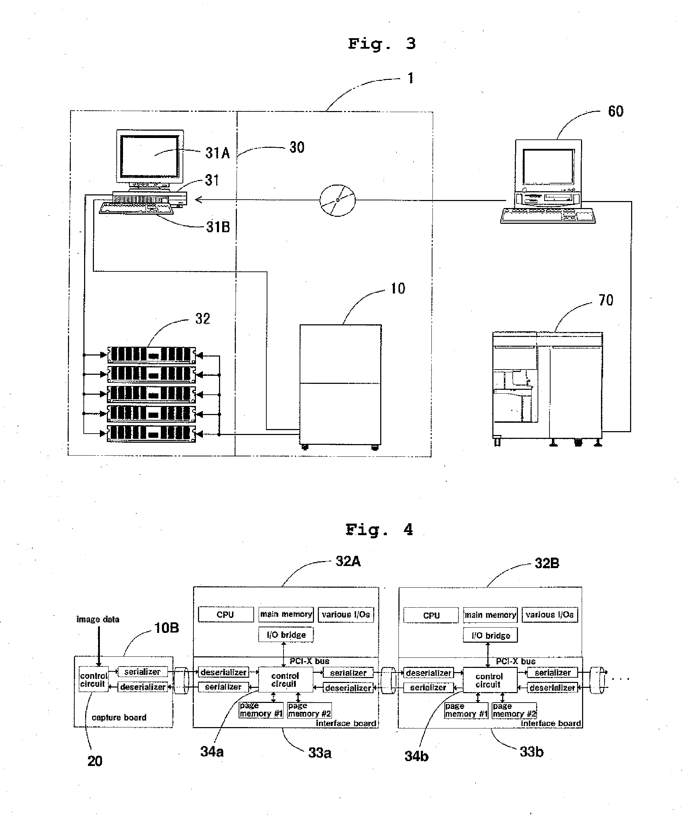

As shown in Fig. 1 and Fig. 3, the processing unit 30 is composed of an inspecting server 31 disposed inside the casing and inspecting terminals 32 (32A, 32B, 32C, 32D, and 32E) composed of a plurality of computers with the same specification. In other words, as shown in Fig. 1, when the processing unit 30 is considered mechanically, it is a lack accommodating the inspecting server 31 and the inspecting terminals 32 and when it is considered functionally, as shown in Fig. 3, it is a computer group for determining whether or not characters have been correctly printed on a continuous business form F by the printer. Incidentally, Fig. 3 is an equivalent block diagram of Fig. 1 mainly representing the function aspect for each computer.

As shown in Fig. 1, a display 31A of the inspecting server 31 is disposed on an upper portion of the processing unit 30, and a plurality of operation buttons (corresponding to a keyboard of the inspecting server 31 shown in Fig. 3) are disposed on both sides of the display 31A. The inspecting terminals 32 are disposed in a lower portion of the inspecting server 31. As shown in Fig. 3, the inspecting server 31, the respective inspecting terminals 32, and the main unit 10 are connected to one another via communication lines.

As shown in Fig. 4, the interface of the main unit 10 has a capture board 10B having a control Circuit 20, a serializer, and a deserializer. On the other hand, an interface board 33 (33a, 33b, 33c, 33d, 33e) having a control circuit 34 (34a, 34b, 34c, 34d, 34e), a serializer, a deserializer, and a page memory corresponding to two pages is disposed in each inspecting terminal 32. The capture board 10B of the main unit 10 and the interface board of each inspecting terminal 32 are connected to each other via a communication line in a daisy-chain manner where a capture board 10B is positioned at the most upstream side. Therefore, the main unit 10 can transmit image data and the like to the inspecting terminal 32 put in a standby state.

(Continuous business form)

Next, the continuous business form F to be inspected in the print inspecting apparatus 1 of the embodiment will be explained. Incidentally, as shown in Fig. 3, the continuous business form F will be explained as one printed by the system printer 70 controlled by the print server 60 for simplification in explanation.

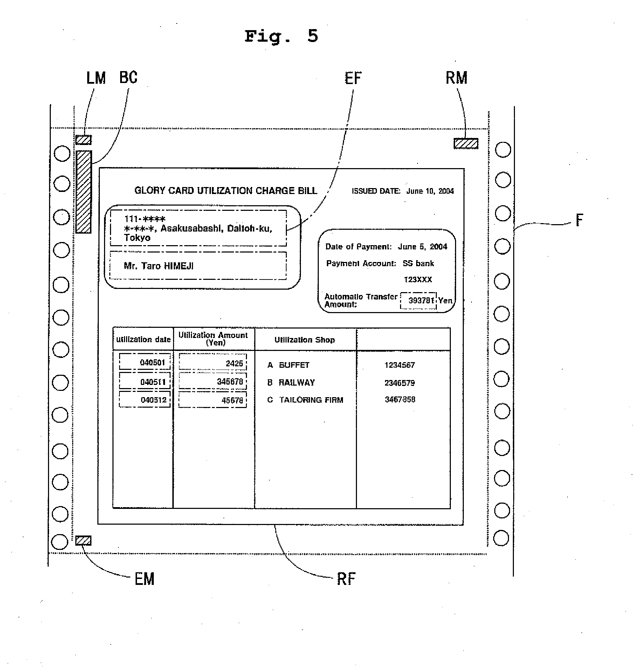

As shown in Fig. 5, each page of a continuous business form F is printed with a start left mark LM which represents start of each page and is arranged on a left side (on a leading side in a conveying direction and on a near side), a start right mark RM which represents start of each page and is arranged on a right side (on the leading side in the conveying direction and on a far side in Fig. 1) on the same height position as the start left mark RM, a barcode BC which is coded with print processing information (information for specifying a job and a page) to the continuous business form F for the system printer 70 and is disposed on a lower side of the start left mark LM, and an end mark EM which represents an end of each page and is arranged on a left side (a trailing side in the conveying direction and on the near side in Fig. 1) have been printed on each page of the continuous business form F such that images on the continuous business form F can be read for each page.

In the embodiment, the marks and barcodes are printed on the continuous business form F by the printer 70. The start left mark LM and the start right mark RM are printed at positions symmetrically regarding in the conveying direction of the main unit 10 so as to have the same shape in order to prevent erroneous recognition between the start left mark LM and the start right mark RM and another mark or the like even if the image processing unit in the main unit 10 recognizes some of a plurality of marks or the like. The start left mark LM is sufficiently larger in width than the end mark EM and the former is sufficiently shorter in length than the latter. The end mark EM is printed within a main scanning position the start left mark LM to the reading direction of the line scan cameras 11, 13. The barcode BC is printed in a sub-scanning direction of the line scan cameras 11, 13 within the main scanning direction of the start left mark LM. The width of the barcode BC is sufficiently shorter than the width of the start left mark LM.

Fig. 5 illustratively shows one example where the continuous business form F shown in Fig. 5 is used as an account sheet. Besides the above-described marks and barcodes, a character string constituting contents of the account sheet is printed on the continuous business form F by the printer 70. In the embodiment, characters in an inspection field EF shown by a one-dotted chain line in Fig. 5 are inspection target characters inspected by the print inspecting apparatus 1. In the embodiment, similar marks and barcodes are printed on a back face of the continuous business form F, and an inspection field EF can be set in a field different from a surface side.

(Operation)

Next, an operation of the print inspecting apparatus according to the embodiment will be explained in the order of the dictionary preparing processing, the form registering processing, and the print inspecting processing. The dictionary preparing processing and the form registering processing are performed before print inspection (processing) of the continuous business form F is performed by the print inspecting apparatus 1.

<Dictionary Preparing Processing>

The dictionary preparing processing is a processing which computes feature amounts of characters to be printed on a continuous business form F by the system printer 70 to prepare a dictionary defining correspondence relationship between the computed character amounts and characters (information). Details are as follows:

First, the print server 60 causes the system printer 70 to print a character string on a continuous form for dictionary preparation in a predetermined format so as to correspond to character information including codes, fonts, and font sizes of all characters to be printed on a continuous business form F by the system printer 70 and causes the system printer 70 to print the above-described marks and the barcode on each page. In the embodiment, a continuous business form which is approximately plain and on which no character is printed, which is difficult from the continuous business form F shown in Fig. 5, and which has the same paper quality as that of the continuous business form F is used as the continuous form for dictionary preparation. As the predetermined format, a format where an identification mark indicating that a character for dictionary preparation is printed on each row, a reference character indicating a size of one character, and characters with plurality font sizes for each font are printed and two or more characters are printed for one font size is used. The "predetermined format" means a protocol where aspect of all characters constituting character information printed on the continuous form for dictionary preparation by the printer can also be grasped on the side of the processing unit 30.

Next, character information including codes, fonts, font sizes of all characters to be printed on the continuous form for dictionary preparation by the system printer 70 is written in a recording medium so as to fit the above-described predetermined format, and the character information is inputted into the inspection server 31 via the recording medium. Thereby, the preparation for dictionary preparation processing is completed. In general, since fonts and font sizes of characters printed on the continuous business form F utilized as account sheets or debit notes are restrictive, amount of information recorded on the recording medium by the print server 60 is not so increased. Accordingly, the above-described "all characters to be printed" does not means all characters which can be printed by the system printer 70, but it means removal of characters with fonts and font sizes which are not printed on the continuous business form F. When the recording medium has an allowance, all characters which can be printed by the system printer 70 may be recorded on the recording medium.

When the continuous form for dictionary preparation printed by the system printer 70 is set in the main unit 10 and a predetermined button in the operation buttons 31B is pressed by an operator, the print inspecting apparatus 1 starts the dictionary preparation processing.

The microcomputer of the main unit 10 which has received the print inspection start command from the processing unit 30 (the inspection server 31) turns on the LED arrays 12A, 12B, and 14A, 14B and drives the conveying motor FM via an actuator control unit. Thereby, the continuous form for dictionary preparation is conveyed at a constant speed in a direction of arrow A shown in Fig. 2, where the line scan cameras 11, 13 start image reading of the continuous form for dictionary preparation. The microcomputer outputs an activation start signal to the CPU in the image processing unit. The microcomputer refers to a signal for the sensor control unit to start monitoring of jam of the continuous form for dictionary preparation or the like. When the continuous business form F is discharged from the main unit 50 to a loop stand 40 in a certain length, an operator sets the discharged portion (a leading portion) of the continuous form for dictionary preparation in the folding apparatus 50.

(The CPU of) the image processing unit of the main unit 10 clips an mage corresponding to one page sectioned by the start left mark LM or the start right mark RM and the end mark EM. That is, the CPU clips an image from a time point when earlier one of the start right mark RM and the end mark EM has been detected at a reading position to the end mark EM as an image corresponding to one page. The image processing unit reads the barcode BC printed after the start left mark LM in parallel with clipping of he image and decodes the barcode BC to acquire the above-described print processing information to output the image data corresponding to one page clipped, the print processing information read from the barcode, and the character information of the page to the control circuit 20 in the capture board 10B. Thereby, each inspecting terminal 32 can recognize correspondence of the image data corresponding to one page received from the print processing information to a page number of the continuous form for dictionary preparation.

On the other hand, the control circuit 34 of the interface board 33 of each inspecting terminal 32 performs a predetermined response and a report including status information indicating an operation status of each inspecting terminal 32 to the control circuit 20 of the capture board 10B of the main unit 10. The response is a status report showing a result obtained by execution of a command for initialization, image data transfer initialization, or the like issued to the interface board 33 of each inspecting terminal 32 by the capture board 10B, and the report is a report autonomously prepared by control circuit 34 for each change of operation states of each inspecting terminal 32, such as termination of use of the page memory. The response and report are transmitted to the capture board 10B from the interface board of a downstream side inspecting terminal toward the interface board of an upstream side inspecting terminal, and (a control circuit) of an interface board of an intermediate (an upstream side) inspecting terminal transfers the response and the report transmitted from the downstream side interface board to a further upstream side interface board or the capture board 10B such that the capture board 10B can receive the response and the report.

Therefore, the control circuit 20 of the capture board 10B can grasp an operation state of each inspecting terminal 32 from the response and the report form the interface board 33 of each inspecting terminal 32. Accordingly, the capture board 10B determines a destination (an awaiting inspecting terminal) based upon predetermined conditions each time when either one of the inspecting terminals 32 is put in a receivable state of image data corresponding to one page and the like (image data corresponding to one page, print processing information read from a barcode, character information of the page) to transmit image data corresponding to outputted from the image processing unit and the like to the interface board of the determined inspecting terminal. That is, a unique number allocated to the inspecting terminal is designated and image data corresponding to one page and the like is transmitted at a time of transmission from the capture board 10B to the interface board of each inspecting terminal. The control circuit 34 in the interface board 33 in each inspecting terminal 32 determines whether or not the designated unique number coincides with the own number. When the answer is affirmative, the control circuit 34 takes in the image data corresponding to one page and the like, and when the answer is negative, the control circuit 34 transfers the received image data corresponding to one page and the like to a downstream side interface board.

In the embodiment, the above-described predetermined conditions are as follows:

When image data and the like is transmitted to the n-th inspecting terminals, (1) the first to (n-1)th inspecting terminals are in operation using the first page of the memory, and the n-th inspecting terminal is not in operation using the first page of the memory, or (2) all the inspecting terminal are in operation using the first page of the memory, the first to (n-1)th inspecting terminals are in operation using the second page of the memory, and the n-th inspecting terminal is not in operation using the second page of the memory.

Each inspecting terminal 32 clips character images from the image of image data corresponding to received page one character by one character to store image data of the clipped character images and print processing information in the RAM and the hard disk. After terminating reading of the continuous form for dictionary preparation, each inspecting terminal 32 reads the clipped character image and the print processing information from the RAM and the hard disk and computes feature amounts obtained, for example, by dividing the clipped character image to small regions of 5x5, computing character vectors about slopes of respective small regions in an image forming direction when 8 directions (45 degrees) are defined as reference vectors, and multiplying the respective character vectors by weight coefficients. Incidentally, when the image is divided into the small regions of 5x5 and the reference vectors in the 8 directions are used, 200 characteristic spaces are formed for each one character, so that a feature vector of a small region constituting a character has a larger weight coefficient, for example, when the small region is positioned nearer an outer side of the character. In the embodiment, since two or more characters to the same or one character (characters identical in code, font, and font size) are printed on a continuous form for dictionary preparation, average feature amount of the same or one character is computed. When each inspecting terminal 32 computes feature amounts of characters corresponding to receive page, it associates the character information and the feature amounts with image data of characters stored in the RAM one character by one character utilizing the character information as index to transmit them as well as the print processing information to the inspecting server 31.

The inspecting server 31 receives dictionaries prepared by at least one inspecting terminal 32 to reconstruct a plurality of dictionaries prepared by the inspecting terminals into one dictionary. The dictionary has a data structure capable of having a plurality of additional feature amounts (described later) added as a feature amount. Next, the inspecting server 31 refers to the print processing information received from the inspecting terminals 32 to determine whether or not a correspondence relationship among the character information, the feature amounts, and the image data has been defined regarding all characters constituting character information inputted via the recording medium (a dictionary for all characters has been prepared). When determination is negative, image data corresponding to one page, print processing information, and the character information corresponding to the page are transmitted to an inspecting terminal 32 put in a standby state (which has transmitted feature amounts and the like to the inspecting server 31) in order to prepare the remaining portion of the dictionary. When determination is affirmative, each inspecting terminal 32 is caused to invalidate the feature amounts in the dictionary which has been prepared.

That is, the inspecting server 31 transmits the characteristic information, the feature amounts, and the image data corresponding to several tens characters, and the resolution information of the resolution lower than that of the image of the image data to each inspecting terminal 32. Each inspecting terminal 32 produces an image with a resolution reduced according to the resolution information from the received image data to computes feature amounts obtained by dividing the produced image to the above-described small regions, computing character vectors about slopes of respective small regions in an image forming direction when 8 directions (45 degrees) are defined as reference vectors, and multiplying the respective character vectors by weight coefficients. When determination is affirmative, information indicating that the feature amount of a character to be invalidated is proper is added to the character information. When the determination is negative, information indicating that the feature amount of a character to be invalidated is improper is added to the character information. When a processing to several tens characters has been terminated, character information is transmitted to the inspecting server 31.

The inspecting server 31 determines whether or not it has received character information about all characters in the prepared dictionary. When determination is negative, the inspecting server 31 further transmits the character information, the feature amounts, and the image data, the resolution information to an inspecting terminal 32 put in a standby state. When the determination is affirmative, the inspecting server 31 refers to information added to each character information to determine whether or not a character whose feature amount has been determined to be improper is present. When determination that the character whose feature amount has been determined to be improper is not present is made, the inspecting server 31 gives a dictionary name to the prepared dictionary (defining a correspondence relationship among character information, character amounts, and image data) to reserve contents of the prepared dictionary in a hard disk and transmit information about the dictionary and the dictionary name except for the correspondence relationship between the character information and the image data in the prepared dictionary, thereby terminating the dictionary preparing processing. When determination that the character whose feature amount has been determined to be improper is present is made, the inspecting server 31 causes the inspecting terminal 32 to change (lower) the validation reference value and continue this step until the feature amounts of all the characters in the prepared dictionary is determined to be proper, sets (the changed) validation reference value as a determination reference value described later (changes a default value of a determination reference value preliminarily set as accompanying information for the dictionary) to give a dictionary name to the prepared dictionary to reserve contents of the prepared dictionary in the hard disk and transmits information of the dictionary and the dictionary name except for information about a correspondence relationship between the character information and the image data in the prepared dictionary, thereby terminating the dictionary preparing processing. Each inspecting terminal 32 reserves the information of the received dictionary and the dictionary name in its hard disk.

<Form Registration processing>

Next, the form registration processing will be explained. The form registration processing is a processing for setting the inspection field EF of the above-described continuous business form F, and details thereof are as follows:

The inspecting server 31 acquires image data corresponding to one page of a continuous business form F read by the main unit 10 via the inspecting terminal 32. Next, the inspecting server 31 clips an image including a region which can be inspected based upon the start left mark LM (or the start right mark RM) and the end mark EM of the image of the acquired image data to perform magnification correction and display the clipped image on the display 31A to wait for designation of the inspection field EF performed by an operator. The,operator sequentially designates inspection field EF through an operation button 31B (or an external computer logged in the inspecting server 31) so that the inspecting server 31 acquires position information of the inspection fields EF.

The inspecting server 31 determines whether or not an operation button indicating the fact that designation of the inspection field EF is terminated is pushed down (or a command for terminating the designation has been received from the external computer). When determination is negative, the inspecting server 31 waits ready because the inspection field EF may be designated continuously. When the determination is affirmative, the inspecting server 31 gives a registration form name to the continuous business form F designated with the inspection field EF, stores (updates) image data of the clipped continuous business form F and the position information of the inspection field EF in the hard disk in relation with the registration form name and transmits the registration form name and the position information of the inspection field EF of the continuous business form F related to the registration form name to each inspecting terminal 32, thereby terminating the form registration processing. Each inspecting terminal 32 which has received the dictionary from the inspecting server 31 stores (or updates) the registration form name and the position information of the inspection field EF of the continuous business form in the hard disk associating them with each other.

Names which can be easily identified by an operator can be attached to the above-described dictionary name and the registration from name. For example, the operator can display the registration form name and the inspection field EF on the display 31A by operating the operation button 31B (logging in the inspecting server 31 from an external computer) to designate the name attached to the registration form name. Fig. 5 shows an example where nine inspection fields EF have been designated.

<Print Inspecting Processing>

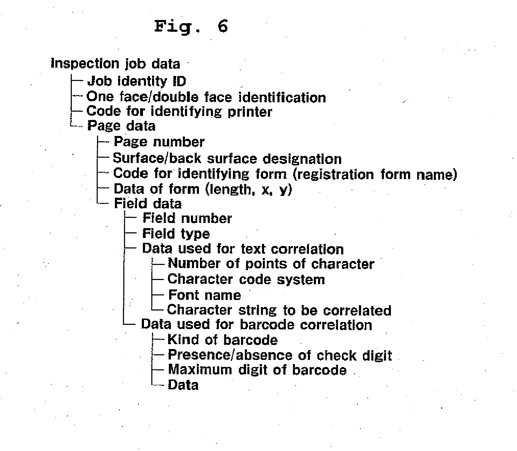

Next, a print inspecting processing will be explained prior to the print inspecting processing, the print server 60 outputs print data to the system printer 70 to cause the system printer 70 to print a character string desired by the operator on a continuous business form F and prepares inspection job data (correct solution information) based upon the print data outputted to the system printer 70 to output the same to a recording medium. Fig. 6 shows one example of a data structure of the inspection job data. The inspection job data includes a job to the continuous business form F performed by the system printer 70 and print processing information for specifying each page or the above-described character information (job identity ID, field data) in addition to the information (code for identifying a printer, a code for identifying a form) for specifying the dictionary name and the registration form name.

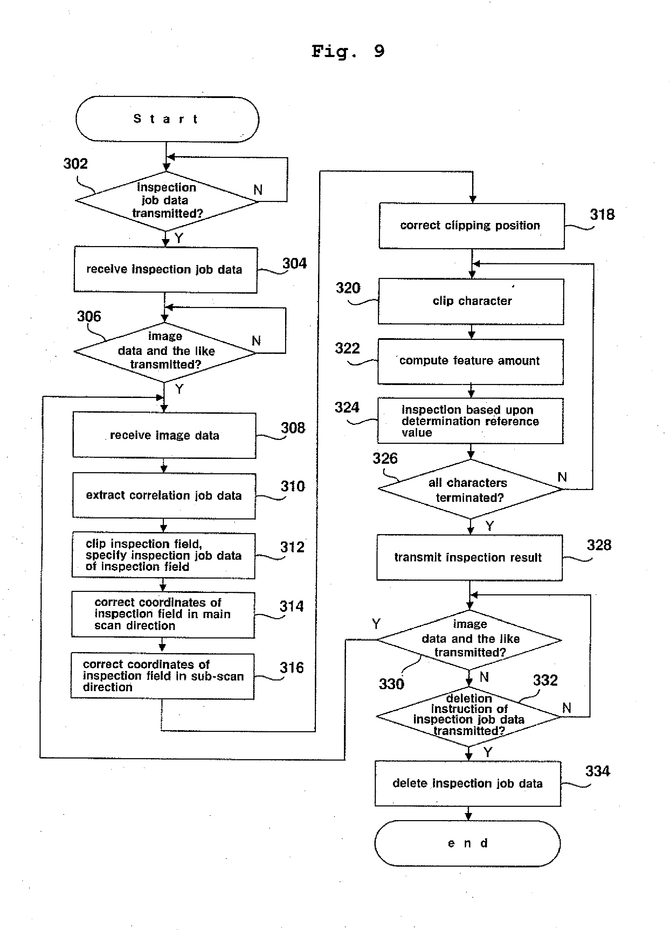

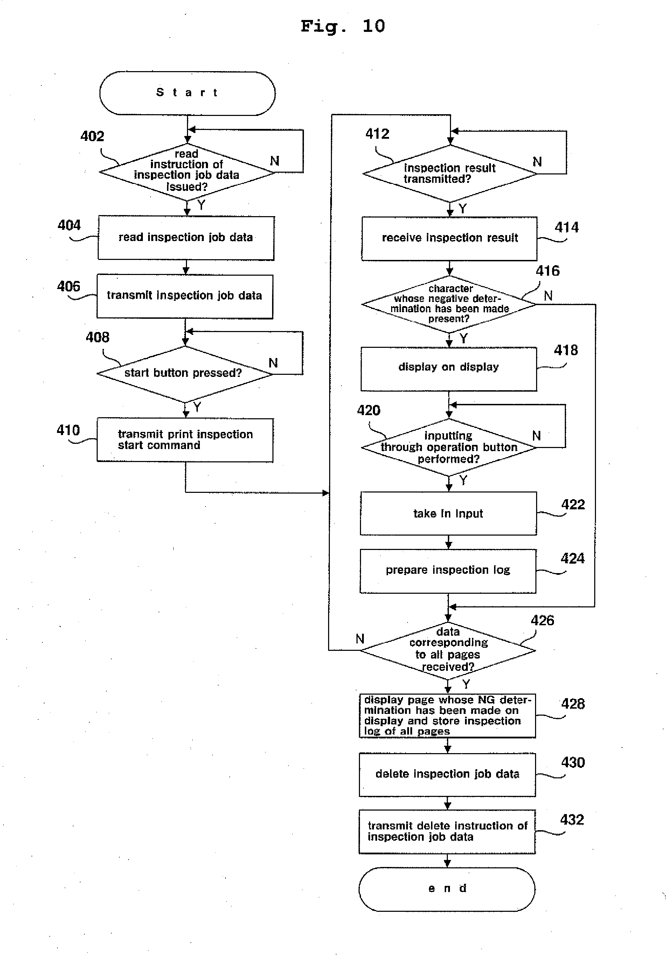

An operator operates the operation button 31B to cause the inspecting server 31 to read inspection data job recorded in the recording medium prepared by the print server 60 (steps 402 and 404 in Fig. 10). When the inspecting server 31 reads the inspection job data, it reserves (stores) the read inspection job data in the hard disk and thereafter it transmits the read inspection job data to each inspecting terminal (step 406). Thereby, preparation of the print inspecting processing at each inspecting terminal 32 is terminated (steps 302 and 304 in Fig. 9).

When the continuous business form F printed by the system printer 70 is set in the main unit 10 by an operator and a predetermined start button in the operation button 31b is pushed down by the operator (step 408 in Fig. 10), the print inspecting apparatus 1 starts the print inspection processing to transmit a print inspection start command to the microcomputer in the main unit 10 (step 410).

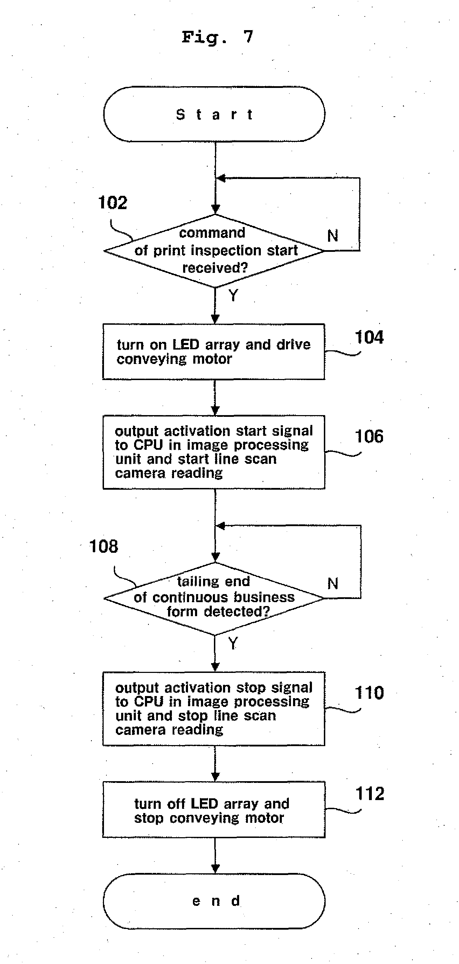

Similarly to the dictionary preparing processing, the microcomputer of the main unit 10 which has received the print inspection start command from the processing unit 30 (step 102 in Fig. 7) turns on the LED arrays 12A, 12B, and 14A, 14B and drives the conveying motor FM via an actuator control unit (step 104). Thereby, the continuous business form F is conveyed at a constant speed in a direction of arrow A shown in Fig. 2, where the line scan cameras 11, 13 start image reading (step 106). The microcomputer outputs an activation start signal to the CPU in the image processing unit (step 106). The microcomputer refers to a signal for the sensor control unit to start monitoring of jam of a continuous business form F or the like. When the continuous business form F is discharged from the main unit 50 to a loop stand 40 in a certain length, an operator sets the discharged portion (a leading portion) of the continuous business form F in the folding apparatus 50. Thereafter, the main unit 50 performs the print inspection processing and the microcomputer monitors whether a remaining paper detecting sensor 22 has detected a tailing end of the continuous business form F. When the remaining paper detecting sensor 22 detects the trailing end of the continuous business form F (step 108), the microcomputer outputs an activation stop signal to the CPU of the image processing unit and stops reading performed by the line scan cameras 11, 13 (step 110) and turns OFF the LED arrays 12A, 12B, and 14A, 14B to stop drive of the conveying motor FM (step 112), thereby terminating the processing.

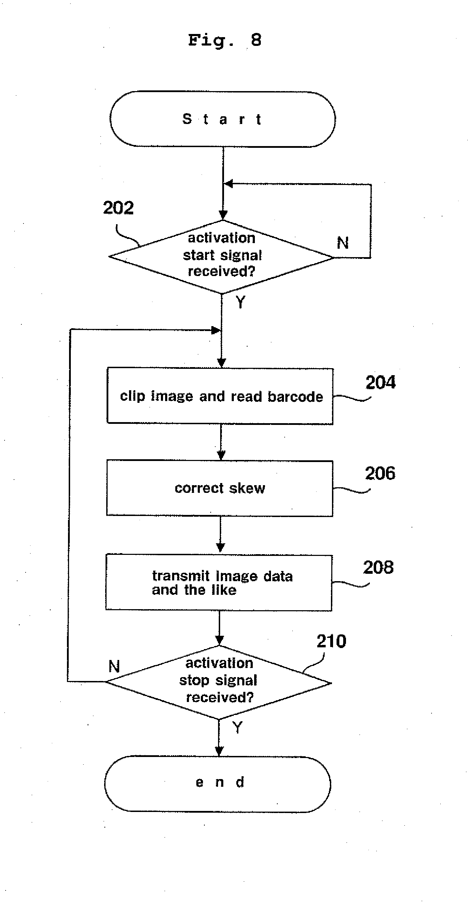

When the CPU of the image processing unit of the main unit 10 receives an activation start signal from the microcomputer of the main unit 10 (step 202 in Fig. 8), it is, the CPU clips an image from a time point when earlier one of the start right mark RM and the end mark EM has been detected at a reading position to the end mark EM as an image corresponding to one page. The CPU in the image processing unit reads the barcode BC printed after the start left mark LM in parallel with clipping of he image (step 204 for decoding the barcode BC and acquiring print processing information).

Next, the CPU of the image processing unit performs skew correction on the image corresponding to the clipped one page (step 208). That is, when the number of pixels Tx[pel] between the start left mark LM and the start right mark RM is counted, a deviation amount between the start right mark RM and the start left mark LM in the conveying direction is counted as a skew amount delta Ty [line], and image data of coordinates $(x, y)$ is defined as $V(x,y)$, skew correction is performed according to the following equation.

```
V(x,y)=q(x)・V(x,y+s(x)+r(x)・V(x,y+s(x)+1)
Where s(x)=int(x・deltaTy/Tx), r(x)= x・deltaTy/Tx-s(x),
q(x)=1-r(x)
```

The CPU of the image processing unit counts the number of main scanning lines Ty[line] between the start left mark LM and the end mark EM and counts delta x when a deviation amount between the start left mark LM and the end mark EM is defined as delta x + Offset [pel] so as to correct the coordinates when an image of the inspection field EF is clipped at an inspection end. When terminates the skew correction, the CPU of the image processing unit sequentially transmits image data corresponding to one page whose skew has been corrected, the read barcode data (print processing information such as decoded print job or page), the number of pixels Tx between the start left mark LM and the start right mark RM, the number of main scanning line Ty between the start left mark LM and the end mark EM, and delta x when the deviation amount between the start left mark LM and the end mark EM is defined as delta x + Offset [pel] to the control circuit 20 in the capture board 10B

As described above, the control circuit 20 in the capture board 10B grasps an operation state of each inspecting terminal 32 from the response and the report transferred at the interface board 33 in the inspecting terminal, it determines a destination based upon the predetermined conditions, and it transmits image data corresponding to one page and the print processing information outputted from the image processing unit to the interface board of the determined inspecting terminal. The control circuit 34 of the interface board 33 of each inspecting terminal 32 determines whether or not the designated unique number coincides with its own number. When determination is affirmative, the control circuit 34 takes in the image data corresponding to one page and the like, but when the determination is negative, the control circuit 34 transfers the received image data corresponding to one page and the like to a downstream side inspecting terminal. Accordingly, the CPU of the image processing unit sequentially transmits barcode data and the like to awaiting inspecting terminals 32 via the control circuit 20 in the capture board 10B (step 208). Incidentally, the CPU of the image processing unit determines whether or not it receives an operation stopping signal from the microcomputer in the main unit 10 (also see step 210 and step 110 in Fig. 7). When determination is negative, the CPU returns back to step 204, but when the determination is affirmative, the CPU terminates the processing.

Each inspecting terminal 32 recognizes its own processing part form the received barcode (print processing information) (steps 306, 308 in Fig. 9) to extract collation job data (correct solution information) of characters on the corresponding page from the already received inspection job data (steps 302, 304) (step 310). Each inspecting terminal 32 recognizes a registration form name from the inspection job data to acquire position information of the already-received inspection field EF from the registration form name, and clips an image of the inspection field EF from the image data corresponding to the received one page and specifies the inspection job data (correct solution information) of the inspection field EF (step 312).

Each inspecting terminal 32 causes the number of pixels Tx [pel] between the received start left mark LM and start right mark RM to correspond to the distance x mm in the inspection job data to obtain a magnification correction coefficient Ax in the main scanning direction from the optical resolution p[DPI], for example, as Ax=25.4 · Tx/(p · x) and corrects the coordinates of the inspection field EF in the main scanning direction (step 314) . For example, (the coordinate in the main scanning direction after correction) =Ax (the coordinate of the inspection field EF in the main scanning direction instructed by the inspection job data) can be used for this correction.

Each inspecting terminal 31 causes the number of main scanning lines Ty[line] between the start left mark LM and the end mark EM and the corresponding distance y mm in the inspection job data to correspond to each other to obtain a magnification correction coefficient Ay in the sub-scanning direction from the optical resolution p[DPI], for example, as Ay=25.4 · Ty/(p · y) and corrects the coordinates of the inspection field EF in the sub-scanning direction (step 316). For example, (the coordinate in the sub-scanning direction after correction) = Ay · (the coordinate of the inspection field EF in the sub-scanning direction instructed by the inspection job data) can be used for this correction.

Each inspecting terminal 31 corrects the main scanning direction of the clipping position of the inspection field EF based upon the deviation amount delta x when a deviation amount between the received start left mark LM and end mark EM is defined as delta x + Offset[pel](step 318). Here, Offset represents a positional deviation amount in the main scanning direction due to a difference in shape between the start left mark LM and the end mark EM. Skew correction is performed by causing the number of main scanning lines Ty[line] between the start left mark LM and the end mark EM to correspond to the corresponding distance y mm in the inspection job data to obtain a magnification correction coefficient Ax' in the main scanning direction from the optical resolution p[DPI], for example, as Ax' = delta x/Ty and correcting the coordinates of the inspection field EF according to the following equation to correct the coordinates of the inspection field EF to skew in the main scanning direction:
(coordinates in the main scanning after correction) = Ay · (the coordinate of the inspection field EF in the sub-scanning direction instructed by the inspection job data)

Next, each inspecting terminal 32 clips character images from an image in the inspection field EF one character by one character (step 320), divides the character image into the above-described predetermined small regions, computes character vectors of slopes of respective small region in the image forming direction, and computes feature amounts by multiplying the respective characteristic vectors by weight coefficients (step 322). Next, each inspecting terminal 32 utilizing collation job data (correct solution information) of the clipped character as index to determine whether or not the computed feature amount is equal to or more than the determination reference value received to the feature amount corresponding to the clipped character in the dictionary (step 324). When determination is affirmative, it is determined that the character (the character to be inspected) clipped from the image in the inspection field EF has been correctly printed on the continuous business form F by the system printer 70.

Each inspecting terminal 32 collects determination results for each page (step 326) to transmit them to the inspecting server 31 as an inspection result (step 328). At this time, Regarding a character which has been subjected to negative determination (determination that the character has not been printed properly), each inspecting terminal 32 transmits attribute information regarding the character (the print processing information, character information of the character in the collation job data) and image data of the image clipped from the inspection field EF about the character to the inspecting server 31. Thereafter, each inspecting terminal 32 determines whether or not image data about another page (see step 308 in Fig. 8) or the like is transmitted from the image processing unit (step 330 in Fig. 7). When determination is affirmative, each inspecting terminal 32 returns back to step 308. When the determination is negative, each inspecting terminal 32 determines whether or not an erase instruction of the inspection job data has been transmitted form the inspecting server 31 (step 332, also see step 432 in Fig. 10). When determination is negative, each inspecting terminal 32 returns back to step 330. When the determination is affirmative, each inspecting terminal 32 proceeds to step 334.

The inspecting server 31 which has received the inspection result (steps 412, 414 in Fig. 10) determines whether or not a character which has been subjected to negative determination is present (step 416). When determination is affirmative, regarding characters which have been determined as improper printing the inspecting server 31 sequentially displays both the image of the character extracted by referring the dictionary utilizing the character information included in the attribute information and the image of the character which has been clipped from the inspection field EF and has been transmitted from the inspecting terminal 32 on the display 31A (step 418) and it stands by until a predetermined button in the operation buttons 31B is pressed down such that an operator can make determination about OK or NG visually (step 420). When the operator pushes down the operation button, the inspecting server 31 takes inputted information. When the information is information indicating OK, the inspecting server 31 utilizes the character information to index to additionally register the feature amount of the clipped character (the character which has been determined to be OK by the operator through visual confirmation) to the dictionary as the additional feature amount, adds information defining a correspondence relationship with the image data and prepares the determination result (OK) based upon the visual confirmation as inspection log. When the information is information indicating NG, the inspecting server 31 prepares the inspection result and the determination result (NG) based upon the visual confirmation as inspection log (steps 422, 424).

On the other hand, when the inspecting server 31 determines that no character which has been subjected to negative determination is present in the inspection result received from the inspecting terminal 32, it refers to page data in the inspection job data to stand by until it receives the inspection result about all the pages and performs a similar processing (step 426) to reserve inspection log of all the pages (step 428). The inspecting server 31 transmits the character information of the character whose additional feature amount has been registered and the additional feature amount to each inspecting terminal 32 to update the information in the dictionary, deletes the inspection job data (step 430), and transmits a deletion instruction of the inspection job data to each inspecting terminal 32 (step 432), thereby the print inspection. When Each inspecting terminal 32 receives the instruction (step 332), it deletes the inspection job data (step 334) to terminate the processing. Thereby, when the processing unit 30 next inspects a character printed on a continuous business form F by the system printer 70, it determines whether or not there plural feature amounts whose correspondence has been defined in the dictionary. When determination is affirmative, the processing unit 30 determines whether or not the feature amount of the clipped character is equal to or more than the determination reference value to either of the feature amounts whose correspondence has been defined in the dictionary. When determination is negative, the processing unit 30 determines whether or not the feature amount of the clipped character is equal to or more than the determination reference value to another feature amount. Incidentally, the page which has been determined as NG can be printed again by the system printer 70 through reference to the inspection log or it may be corrected manually or by another means.

(Operation and the like)

Next, an operation and the like of the print inspecting apparatus 1 according to the embodiment will be explained.

In the print inspecting apparatus according to the embodiment, characters printed on a continuous form for dictionary preparation in the predetermined format according to the character information by the system printer 70 are read by the main unit 10, feature amounts of all character are computed in the processing unit30, so that a dictionary defining a correspondence relationship between the feature amounts of the all computed characters and the preliminarily inputted character information of the characters which can be printed on a continuous business form F by the system printer 70. Therefore, the processing unit 30 can determines whether or not a character has been printed correctly on the continuous business form F by the system printer 70 even if the character is an external character.

In the print inspecting apparatus according to the embodiment, since a dictionary defining a correspondence relationship between characters which can be printed on a continuous business form Fby the system printer 70 and feature amounts thereof are prepared in advance in the dictionary preparing processing, each character printed on a continuous business form F is clipped and a feature amount thereof is computed, and feature amounts of the clipped character and the character in the dictionary are collated as utilizing the collation job data (correct solution information). Since the processing unit 30 (inspecting terminal 32) collates the feature amounts, a complicated character recognizing processing using a recognition function or the like is not required. Therefore, any complicated processing for character recognition is not required, so that error occurrence in character recognition can be prevented. Since the feature amounts are collated, it is unnecessary to prepare logic at a collation time for each character information.

In the print inspecting apparatus 1 of the embodiment, since feature amounts of characters printed by the same printer are collated, influence due to individual differences can be excluded without being influenced by fine difference in shape of font between printers. In the print inspecting apparatus 1 of the embodiment, since determination is made by the processing unit 30 that feature amounts are equal to or more than the determination reference value, print inspection can be performed flexibly at high precision by setting the determination reference value.

In the print inspecting apparatus 1 of the embodiment, since even if it is determined by the processing unit 30 that the feature amount is less than the determination reference value, the determination result of an operator can be inputted via the display 31A and the operation button 31B, the print inspecting apparatus 11 can solve the problem of aging degradation. Since the feature amount of the character whose feature amount has been once determined to be less than the determination reference value can be determined in the dictionary as the additional feature amount according to the determination result of an operator and the dictionary has a structure being capable of having plural additional feature amounts, print inspection can be sequentially performed to the plural feature amounts, so that a learning function can be provided to the print inspecting apparatus 1. In this case, if determination is first made about a feature amount of a character to be inspected is equal to or more than a determination reference value to the additional feature amount latest added in the dictionary, responsibility to aging degradation of the system printer 70 can be improved.

In the print inspecting apparatus 1 of the embodiment, since the image processing unit decodes the barcode printed on the continuous business form F to notify the decoded print processing information to each inspecting unit, even of the print inspection job to the continuous business form printed by a plurality of printers is rangy, each inspecting terminal 32 refers to the print processing information from the correct solution information preliminarily inputted to specify correct solution information regarding a character string to be inspected, so that correspondence management between the continuous business form and the correct solution information can be performed easily.

In the print inspecting apparatus 1 of the embodiment, since unique properties are imparted to a plurality of marks printed on the continuous business form F, when the image processing unit in the processing unit 30 recognizes a portion of a mark, erroneous recognition between the mark and another mark can be prevented. Since a plurality of marks and barcodes BC printed on the continuous business form F by the system printer 70 printed at specific print positions and in specific directions, the barcode and the plurality of marks do not interfere with each other, so that the image processing unit in the main unit 10 can clip an image on each page from the continuous business form F correctly.

In the print inspecting apparatus 1 of the embodiment, since the image processing unit in the main unit 10 performs skew correction, position precision is improved when each inspecting unit 32 clips an inspection field EF. Since accurate clipping can be performed one character by one character without causing loss in an image of a character to be inspected, inspection precision in the print inspecting apparatus 1 can be improved.

In the print inspecting apparatus 1 according to the embodiment, since a plurality of computers configure the inspecting terminals 32, the inspecting server 31 transmits an image read for each page to an awaiting inspecting terminal 32 to perform processings such as the feature amount computation in parallel, and the inspecting unit 32 determines whether or not only a character in the inspection field FF set in the form registration processing has been printed on a continuous business form F correctly, print inspection can be performed rapidly.

In the print inspecting apparatus 1 according to the embodiment, since the print inspection is performed in offline manner, and the dictionary preparing processing, the form registration processing, and the print inspecting processing can be performed for each plural printers (since these processings are not limited to a specific printer), high versatility can be secured.

In the print inspecting apparatus 1 of the embodiment, the control circuit 20 in the capture board 10B grasps an operation state of each inspecting terminal 32 from the response and the report transferred at the interface board 33 in the inspecting terminal to determine an inspecting terminal 32 which is a destination of the image data and the like, transmit image data corresponding to one page to the interface board of the determined inspecting terminal 32. The control circuit 34 in the interface board 33 in each inspecting terminal 32 determines whether or not the designated unique number coincides with its own number. When determination is affirmative, the control circuit 34 takes in image data corresponding to one page and the like, but when the determination is negative, the control circuit 34 transfers the receive image data corresponding to one page and the like to an interface board in a downstream side inspecting terminal. Accordingly, when the print inspection processing is performed with a daisy-chain configuration, image data corresponding to one page can sequentially transmit image data corresponding to one page to awaiting inspecting terminals 32, thereby raising an operating rate.

In the print inspecting apparatus 1 of the embodiment, since the capture board 10B transmits image data corresponding to one page and print processing information corresponding to the image data to each inspecting terminal 32, each inspecting terminal 32 can refer to print processing information in correct solution information to extract the correct solution information corresponding to the image data corresponding to one page, thereby performing collation inspection securely. Therefore, the page of the image data and a page of an actual continuous business form do not correspond to each other, so that erroneous extraction of correct solution information can be prevented.

In the embodiment, the example where a character on a continuous business form F printed by the system printer offline has been explained. As explained in the Explanation of Related Art, however, when a series of processings from printing on a continuous business form F to sealing of an envelope are continuously performed, on-line configuration can be adopted. In this case, the continuous business form F discharged from the system printer 70 may be set in the main unit 10 utilizing a loop stand having a buffering function, and the print server 60 and the processing unit 30 may be connected through a communication line.

In the embodiment, the example where images on a continuous business form are read using the high-speed line sensor has been shown, but an area sensor may be used in order to elevate a reading rate. In the embodiment, the example where both faces of a continuous business form are read has been shown, but a constitution where only one face of a continuous business form is read may be adopted, of course.

In the embodiment, as shown in Fig. 6, the example where a code for identifying a printer or a code for identifying a form may be provided to inspection job data has been shown, but such a configuration can be adopted that an operator inputs the inspection job data except for these codes or information from the operation button 31B.

In the embodiment, since the example where skew processing is performed in the main unit 10 has been shown, but it may be performed by the inspecting terminal 32 for each page.

In the embodiment, the example where skew correction is not performed in the dictionary preparation processing has been explained for simple explanation, but skew processing may be performed therein like the print inspection processing.

In the embodiment, the example where a character printed on a continuous form for dictionary preparation is specified according to the character information in the predetermined format in the dictionary preparation processing, correct solution information may be used like the print inspection processing. In the embodiment, the example where a character printed on a continuous business form is inspected has been shown, but the present invention is not limited to the example. For example, the present invention can be applied to a print inspecting apparatus which continuously or intermittently inspects characters printed on a single form or sheet.

In the embodiment, the example where a dictionary defining a correspondence relationship between all characters which can be printed on a continuous business form F by the printer 70 and feature amounts thereof is preliminarily prepared, images of characters printed on the continuous business form F are clipped and feature amounts thereof are computed, and feature amounts are collated with each other using collation job data as index, but the second aspect of the present invention is not limited to the example. The second aspect can be applied to an image collation technique where image data used in printing and image data read from a printed matter are collated to each other and the character collation technique described in Description of the Related Art where printed character is read and is applied with OCR process, character recognition is performed, and a result obtained by conversion to character data is collated.

In the embodiment, the example where the interface board 33 has a page memory corresponding to two pages has been shown, but the present invention is not limited to the example. The interface board may be constituted to have a page memory corresponding to one page or a page memory corresponding to three or more pages. For example, when the interface board 33 has a page memory corresponding to one page, it is necessary to satisfy only the above-described condition (1) as the above-described predetermined conditions. The example where an awaiting interface board is determined from the upstream side has been explained, but the present invention is not limited to this embodiment. Such a configuration may be adopted that image data or the like is transmitted to any awaiting interface board.

In the embodiment, the example where a plurality of marks are printed on a continuous form for dictionary preparation or a continuous business form F by system printer 70 has been shown, but a continuous form for dictionary preparation or a continuous business form F with these marks preliminarily printed may be used.

(Industrial Applicability)

As explained above, since the first aspect of the present invention provides a print inspecting apparatus which can perform print inspection flexibly at high precision at high speed while excluding influence due to individual differences among a plurality of printers, and the second aspect thereof provides a print inspecting apparatus which can improved an operating rate when collation processing is performed in a daisy-chain configuration, they contribute to manufacture and sale of a print inspecting apparatus and has high industrial applicability.

**Claims**

1. A print inspecting apparatus which inspects a character printed on a form by a printer, comprising:

   a conveying unit which conveys the form in one direction;
   an image reading unit which reads an image on the form conveyed by the conveying unit;
   a feature amount computing unit which clips an image of a character printed on the form from an image read by the image reading unit;
   a dictionary preparing unit which defines a correspondence relationship between preliminarily inputted character information including codes, fonts and font sizes of all characters which can be printed by the printer and feature amounts of the all characters which are printed on the form in a predetermined format so as to correspond to the character information by the printer, is read by the image reading unit, and is computed in the feature amount computing unit; and
   a print determining unit which utilizes preliminarily inputted correct solution information regarding a character string printed on the form by the printer as index to make determination about whether or not the feature amount of the character to be inspected which has been read from the form in the image reading unit and been computed in the feature amount computing unit is equal to or more than a determination reference value preliminarily set to the feature amount of the character whose correspondence relationship has been defined in the dictionary preparing unit to determine that the character to be inspected has been printed on the form correctly by the printer when the feature amount of the character to be inspected is equal to or more than the determination reference value.

2. A print inspecting apparatus according to claim 1,
   wherein the image reading unit reads images on the form conveyed by the conveying unit for each page and the feature amount computing unit clips the images of the characters printed on the form from the image read for each page by the image reading unit one character by one character.

3. A print inspecting apparatus according to claim 1, further comprising an inspection field setting unit for setting an inspection field in each page of the form, wherein images of characters printed on the form are clipped from an image of the inspection field in the image read by the image reading unit which is set by the inspection field setting unit one character by one character.

4. A print inspecting apparatus according to claim 2,
   wherein the feature amount computing unit has a plurality of computers which can compute feature amounts of characters clipped from the image read by the image reading unit for each page in parallel.

5. A print inspecting apparatus according to claim 1,
   wherein the feature amount computing unit divides the image of a character into small regions to utilize an image formation direction of each small region as an element of the feature amount.

6. A print inspecting apparatus according to claim 1, further comprising a reserving unit which, when determination that the feature amount of the character computed by the feature amount computing unit is less than the determination reference value of the feature amount of the character whose correspondence to the feature amount has been defined by the dictionary preparing unit has been made by the print determining unit, reserves character information of a character to be inspected and the image of the character clipped by the feature amount computing unit as log data.

7. A print inspecting apparatus according to claim 1, further comprising a display unit which, when determination that the feature amount of the character computed by the feature amount computing unit is less than the determination reference value of the feature amount of the character whose correspondence has been defined by the dictionary preparing unit has been made by the print determining unit, displays an image of a character to be inspected which has been clipped by the feature amount computing unit, and an input unit for causing an operator to input a determination result of the operator about whether or not the character to be inspected which has been displayed on the display unit has been printed on the form correctly by the printer.

8.  A print inspecting apparatus according to claim 1, further comprising a verifying unit which verifies the dictionary prepared by the dictionary preparing unit and a determination reference value setting unit which sets the determination reference value according to a verification result obtained by the verifying unit.

9.  A print inspecting apparatus according to claim 1, further comprising:

    a display unit which, when determination that the feature amount of the character computed by the feature amount computing unit is less than the determination reference value of the feature amount of the character whose correspondence has been defined by the dictionary preparing unit has been made by the print determining unit, displays an image of a character to be inspected which has been clipped by the feature amount computing unit,
    an input unit for causing an operator to input a determination result of the operator about whether or not the character to be inspected which has been displayed on the display unit has been printed on the form correctly by the printer, and
    a registration unit which, when information indicating that a character to be inspected has been printed correctly has been inputted from the input unit, registers a feature amount computed by the feature amount computing unit to the feature amounts in the dictionary prepared in the dictionary preparing unit as an additional feature amount utilizing the feature amount of the character to be inspected as index,

    wherein the dictionary preparing unit prepares a dictionary defining a correspondence relationship among preliminarily inputted character information including codes, fonts and font sizes of all characters which can be printed on the form by the printer, feature amounts of the all characters which are printed on the form in a predetermined format so as to correspond to the character information by the printer, is read by the image reading unit, and is computed in the feature amount computing unit, and the image of the character which has been clipped in the feature amount computing unit.

10. A print inspecting apparatus according to claim 9,
    wherein the display unit displays the image of the character to be inspected which has been clipped by the feature amount computing unit and the image of the character to be inspected whose correspondence relationship has been defined in the dictionary preparing unit utilizing the character information of the character to be inspected as index simultaneously.

11. A print inspecting apparatus according to claim 9,
    wherein the dictionary prepared in the dictionary preparing unit has a data structure which can have a plurality of additional feature amounts which can be registered in the registration unit.

12. A print inspecting apparatus according to claim 9,
    wherein the print determining unit makes, utilizing the correct solution information as index, determination about whether or not the feature amount of the character to be inspected which has been computed by the feature amount computing unit is equal to or more than the determination reference value to either feature amount of the feature amount of the character whose correspondence relationship has been defined in the dictionary preparing unit and the feature amount which has been preliminarily registered.

13. A print inspecting apparatus according to claim 12,
    wherein when determination that the feature amount of the character to be inspected which has been computed by the feature amount computing unit is less than the determination reference value to either feature amount has been made, the print determining unit makes determination about whether or not the feature amount of the character to be inspected which has been computed by the feature amount computing unit is equal to or more than the determination reference value to the other feature amount.

14. A print inspecting apparatus according to claim 9,
    wherein the image reading unit reads images on the form conveyed by the conveying unit for each page and the feature amount computing unit clips the images of the characters printed on the form from the image read for each page by the image reading unit one character by one character.

**15.** A print inspecting apparatus according to claim 14, further comprising an inspection field setting unit for setting an inspection field in each page of the form, wherein images of characters printed on the form are clipped from an image of the inspection field in the image read by the image reading unit which is set by the inspection field setting unit one character by one Character.

**16.** A print inspecting apparatus according to claim 14,
wherein the feature amount computing unit has a plurality of computers which can compute feature amounts of characters clipped from the image read by the image reading unit for each page in parallel.

**17.** A print inspecting apparatus according to claim 9,
wherein the feature amount computing unit divides the image of a character into small regions to utilize an image formation direction of each small region as an element of the feature amount.

**18.** A print inspecting apparatus according to claim 9,
wherein the print determining unit utilizes preliminarily inputted correct solution information including print processing information for specifying jog to the form performed by the printer and specifying each page regarding a character string printed on the form by the printer as index to make determination about whether or not the feature amount of the character to be inspected which has been read from the form in the image reading unit and been computed in the feature amount computing unit is equal to or more than a determination reference value preliminarily set to the feature amount of the character whose correspondence relationship has been defined in the dictionary preparing unit to determine that the character to be inspected has been printed on the form correctly by the printer when the feature amount of the character to be inspected is equal to or more than the determination reference value,

the image reading unit reads a plurality of marks printed at predetermined positions of respective pages to clip images on the form for each page and reads and decodes barcodes obtained by coding the print processing information printed on the respective pages of the form by the printer to notify the decoded print processing information to the print determining unit, and
the print determining unit refers to the print processing information notified from the image reading unit to specify correct solution information from the correct solution information preliminarily inputted.

**19.** A print inspecting apparatus according to claim 18,
wherein the image reading unit notifies the decoded print processing information to the print determining unit via the feature amount computing unit, and the print determining unit refers to information specifying job of the print processing information notified from the feature amount computing unit to specify correct solution information for print determination of the preliminarily inputted correct solution information and refers to information specifying a page in the print processing information to extract correct solution of a page to which a character whose feature amount has been computed in the feature amount computing unit belongs from the correct solution information for print determination.

**20.** A print inspecting apparatus according to claim 19,
wherein the feature amount computing unit has a plurality of computers which can compute feature amounts of characters clipped from the image read by the image reading unit for each page in parallel.

**21.** A print inspecting apparatus according to claim 19,
wherein the image reading unit reads a start right mark printed on one side of a leading end of each page of the form in a conveying direction of the conveying unit, a start left mark printed on the other side of the leading end of each page of the form in the conveying direction of the conveying unit, and an end mark printed on a trailing end side of each page of the form in the conveying direction of the conveying unit to clip images on the form for each page.

**22.** A print inspecting apparatus according to claim 21,
wherein the start right mark and the start left mark are printed symmetrically in the conveying direction of the conveying unit to have the same shape, the start left mark is larger in width and shorter than the end mark, and the end mark is printed within a main scanning position of the start left mark to the image reading unit.

**23.** A print inspecting apparatus according to claim 22,
wherein the barcode is printed in a sub-scanning direction to the image reading unit and is positioned within the main scanning direction of the start left mark, and a width of the barcode is smaller than that of the start left mark.

**24.** A print inspecting apparatus according to claim 21,
wherein the image reading unit clips an image on each page of the form at a time point when either of the start left mark and the start right mark printed on the form reaches a reading position.

**25.** A print inspecting apparatus according to claim 19, further comprising an inspection field setting unit for setting an inspection field in each page of the form, wherein images of characters printed on the form are clipped from an image of the inspection field in the image read by the image reading unit which is set by the inspection field setting unit one character by one character.

**26.** A print inspecting apparatus according to claim 25, further comprising an image correcting unit for performing skew correction to an image clipped for each page by the image reading unit, wherein the feature amount computing unit clips an image of a character printed on the form from the image whose skew has been corrected by the image correcting unit to compute a feature amount of the clipped character.

**27.** A print inspecting apparatus which inspects a character printed on a form by a printer, comprising:

a conveying unit which conveys the form in one direction;
a storage unit which stores preliminarily inputted correct solution information regarding a character string printed on the form by the printer;
an image reading unit which clips images on the form conveyed by the conveying unit, and reads and decodes a barcode which is printed on each page of the form by the printer and is obtained by coding print processing information for specifying job to the form performed by the printer and each page; and
a print inspecting unit having a plurality of computers, which receives image data corresponding to the clipped one page from the image reading unit and the print processing information corresponding to the image data, and performs a collation inspection between information obtained from the character image of the image data and correct solution information of a page corresponding to the image data extracted from the correct solution information stored in the storage unit based upon the print processing information, wherein
the plurality of computers are connected in a daisy-chain configuration where the image reading unit is positioned at the most upstream side through a communication line, and each computer of the computers has a data acquiring unit which acquires the image data and print processing unit transmitted from the image reading unit, a data transferring unit which transfers the image data and print processing unit transmitted from the image reading unit to a downstream side computer, and a status information transferring unit which transfers status information indicating an operation state of a computer transmitted from a downstream side computer to an upstream side computer or the image reading unit, and
the image reading unit refers to status information of the each computer to specify a computer put in an awaiting state and transmits the image data and print processing information to the specified computer via the communication line.

**28.** A print inspecting apparatus according to claim 27,
wherein the each computer has a memory corresponding to one page for receiving the image data, and the image reading unit transmits the image data and print processing information to either computer of computers except for a computer which is performing collation process using the memory corresponding to one page.

**29.** A print inspecting apparatus according to claim 27,
wherein the each computer has a memory corresponding to two pages for receiving the image data, and the image reading unit transmits the image data and print processing information to either computer of computers except for a computer which is performing collation process using the memory corresponding to two pages.

**30.** A print inspecting apparatus according to claim 28,
wherein the each computer transmits the status information toward the image reading unit each time when terminates collation inspection corresponding to one page in the memory.

**31.** A print inspecting apparatus according to claim 27,
wherein the image reading unit reads a start right mark printed on one side of a leading end of each page of the form in a conveying direction of the conveying unit, a start left mark printed on the other side of the leading end of each page of the form in the conveying direction of the conveying unit, and an end mark printed on a trailing end side of each page of the form in the conveying direction of the conveying unit to clip images on the form for each page.

32. A print inspecting apparatus according to claim 27,
    wherein the print inspection unit has an accumulation computer for accumulating the result of print inspection performed for each page of the form by the each computer, and the accumulation computer has the storage unit.

33. A print inspecting apparatus according to claim 27,
    wherein the accumulation computer transmits the correct solution information stored in the storage unit to the each computer before collation inspection is performed by the each computer.

34. A print inspecting apparatus according to claim 27, further comprising a correcting unit for performing skew correction to an image clipped for each page by the image reading unit.

Fig. 1

Fig. 2

Fig. 3

Fig. 4

## Fig. 5

Fig. 6

Inspection job data
- Job identity ID
- One face/double face identification
- Code for identifying printer
- Page data
    - Page number
    - Surface/back surface designation
    - Code for identifying form (registration form name)
    - Data of form (length, x, y)
    - Field data
        - Field number
        - Field type
        - Data used for text correlation
            - Number of points of character
            - Character code system
            - Font name
            - Character string to be correlated
        - Data used for barcode correlation
            - Kind of barcode
            - Presence/absence of check digit
            - Maximum digit of barcode
            - Data

# Fig. 7

```
          ┌──────────────────┐
          │     S t a r t    │
          └──────────────────┘
                   │
                   │←──────────────────┐
                   ▼                   │
   102          ◇ command ◇     N      │
            ◇ of print inspection ◇────┘
               ◇ start received? ◇
                   │ Y
                   ▼
        ┌────────────────────────┐
        │ turn on LED array and  │   104
        │ drive conveying motor  │
        └────────────────────────┘
                   │
                   ▼
        ┌────────────────────────┐
        │ output activation start │  106
        │ signal to CPU in image  │
        │ processing unit and     │
        │ start line scan         │
        │ camera reading          │
        └────────────────────────┘
                   │
                   │←──────────────────┐
                   ▼                   │
   108          ◇ tailing end ◇   N    │
            ◇ of continuous business ◇─┘
              ◇ form detected? ◇
                   │ Y
                   ▼
        ┌────────────────────────┐
        │ output activation stop │   110
        │ signal to CPU in image │
        │ processing unit and    │
        │ stop line scan         │
        │ camera reading         │
        └────────────────────────┘
                   │
                   ▼
        ┌────────────────────────┐
        │ turn off LED array and │   112
        │ stop conveying motor   │
        └────────────────────────┘
                   │
                   ▼
          ┌──────────────────┐
          │     e n d        │
          └──────────────────┘
```

Fig. 8

```
        ┌─────────────────────┐
        │       Start         │
        └─────────────────────┘
                   │
                   ▼
              ╱─────────╲
   202    ╱  activation  ╲      N
        ╱   start signal   ╲──────┐
        ╲    received?     ╱      │
          ╲─────────────╱         │
                 │ Y              │
                 ▼                │
        ┌─────────────────────┐   │
        │ clip image and      │ 204
        │ read barcode        │
        └─────────────────────┘
                 │
                 ▼
        ┌─────────────────────┐
        │   correct skew      │ 206
        └─────────────────────┘
                 │
                 ▼
        ┌─────────────────────┐
        │ transmit image data │ 208
        │ and the like        │
        └─────────────────────┘
                 │
                 ▼
              ╱─────────╲       210
     N     ╱  activation  ╲
    ┌─────╱   stop signal   ╲
    │     ╲    received?    ╱
    │       ╲─────────────╱
    │              │ Y
    │              ▼
    │     ┌─────────────────────┐
    │     │        end          │
    │     └─────────────────────┘
```

## Fig. 9

# Fig. 10

```
                    ┌─────────────────┐
                    │     Start       │
                    └────────┬────────┘
                             │
  402                        ▼
        ┌────────────────────────────┐  N
        │          read              │────┐
        │     instruction of         │    │
        │   inspection job data      │    │
        │        issued?             │    │
        └────────────┬───────────────┘    │
                     │ Y                   │
  404                ▼                     │
        ┌────────────────────────────┐    │
        │    read inspection job data │    │
        └────────────┬───────────────┘    │
                     │                     │
  406                ▼                     │
        ┌────────────────────────────┐    │
        │  transmit inspection job data│   │
        └────────────┬───────────────┘    │
                     │                     │
  408                ▼                     │
        ┌────────────────────────────┐  N │
        │    start button pressed?    │────┘
        └────────────┬───────────────┘
                     │ Y
  410                ▼
        ┌────────────────────────────┐
        │   transmit print inspection │
        │        start command        │
        └────────────┬───────────────┘
                     │
```

```
  412
        ┌────────────────────────────┐  N
        │     inspection result       │────┐
        │       transmitted?          │    │
        └────────────┬───────────────┘    │
                     │ Y                   │
  414                ▼                     │
        ┌────────────────────────────┐    │
        │    receive inspection result │   │
        └────────────┬───────────────┘    │
                     │                     │
  416                ▼                     │
        ┌────────────────────────────┐  N │
        │        character            │────┼──┐
        │   whose negative deter-     │    │  │
        │  mination has been made     │    │  │
        │        present?             │    │  │
        └────────────┬───────────────┘    │  │
                     │ Y                   │  │
  418                ▼                     │  │
        ┌────────────────────────────┐    │  │
        │      display on display     │    │  │
        └────────────┬───────────────┘    │  │
                     │                     │  │
  420                ▼                     │  │
        ┌────────────────────────────┐  N │  │
        │        inputting            │────┘  │
        │  through operation button   │       │
        │        performed?           │       │
        └────────────┬───────────────┘        │
                     │ Y                       │
  422                ▼                         │
        ┌────────────────────────────┐        │
        │         take in input        │       │
        └────────────┬───────────────┘        │
                     │                         │
  424                ▼                         │
        ┌────────────────────────────┐        │
        │     prepare inspection log   │       │
        └────────────┬───────────────┘        │
                     │                         │
  426                ▼                         │
        ┌────────────────────────────┐  N     │
        │          data               │────────► (back to 412)
        │      corresponding          │
        │     to all pages            │
        │       received?             │
        └────────────┬───────────────┘
                     │ Y
  428                ▼
        ┌────────────────────────────┐
        │ display page whose NG deter- │
        │ mination has been made on    │
        │ display and store inspection │
        │ log of all pages             │
        └────────────┬───────────────┘
                     │
  430                ▼
        ┌────────────────────────────┐
        │    delete inspection job data│
        └────────────┬───────────────┘
                     │
  432                ▼
        ┌────────────────────────────┐
        │  transmit delete instruction of │
        │     inspection job data      │
        └────────────┬───────────────┘
                     │
                     ▼
             ┌───────────────┐
             │     e n d     │
             └───────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7082542 B
- JP 2994257 B
- JP 2001096872 A
- JP 2003305927 A
- JP 2000172844 A
- JP 2002150221 A
- JP 2003196230 A
- JP 2004289754 A